# EUROPEAN PATENT APPLICATION

(11) **EP 2 474 876 A1**
(43) Date of publication of application: **11.07.2012**
(21) Application number: 09848761.4
(22) Date of filing: 31.08.2009
(51) Int. Cl.: G06F 1/16

(54) **ELECTRONIC APPARATUS**

(71) Applicant: Fujitsu Limited, Kawasaki-shi, Kanagawa 211-8588 (JP)
(72) Inventor: YAMAGUCHI, Goki, Kawasaki-shi Kanagawa 211-8588 (JP)
(74) Representative: Fenlon, Christine Lesley
(86) International application number: PCT/JP2009/065215
(87) International publication number: WO 2011/024316

(57) **Abstract**

The present application relates to an electronic apparatus. In order to reduce excessive space which is not used when the electronic apparatus actually runs and is provided only for assembly and replacement, the first electronic component is accommodated from a first opening while arranging a first connector provided on a side surface of the first electronic component while arranging the first connector in a direction from the first opening to the second opening, and a second electronic component is accommodated by sliding the second electronic component from a second opening while arranging the second connector provided on a side of the second electronic component in a direction toward the first electronic component accommodated in the first opening so that the second connector is connected with the first connector.

## Description

### TECHNICAL FIELD

The present invention generally relates to an electronic apparatus, and more specifically, to a notebook-type personal computer (hereinafter, referred to as a notebook PC).

### BACKGROUND ART

In electronic apparatus such as a notebook PC, many electronic parts is densely arranged in casings without gaps for the purpose of compactness. The notebook PC ordinarily has a built-in hard disk drive (hereinafter, referred to as a HDD) as an auxiliary storage device. The HDD has a mechanical movable portion by which information is magnetically recorded on the hard disk platters while rotating and reads the information magnetically recorded in the hard disk platters. Due to an existence of the movable portion, a structure of providing an opening in a casing, accommodating the HDD into the opening and covering the opening with a lid may be frequently adopted into the notebook PCs. The HDD may be shaped like a rectangular board, and connecters are provided in a side surface of the HDD. Therefore, if the HDD is accommodated in the casing, the HDD is inserted into the opening and slid to thereby connect a connecter of the HDD to a connector installed on the motherboard. Before the HDD is slid while accommodating the HDD, a space for the sliding motion is prepared in the casing. The space is not used after the HDD is installed and when the notebook PC actually functions. As described, since the electronic apparatus such as the notebook PC is densely arranged for the purpose of compactness in recent years, it is not preferable to leave excessive space in the casing while actually functioning the electronic apparatus after accommodating the electronic component (e.g., HDD) .

There is an exemplary structure of providing a plate having connecters in the centers of the two side surfaces thereof and connecting the connecter with connecters provided in side surfaces of plural electronic components by slide motions of the electronic components in directions toward the two side surfaces of the plate. This exemplary structure adopts substantially the same structure as the above described HDD connection using the slide motion of the HDD. Therefore, the excessive space also remains in the above exemplary structure.

In recent years, solid state drives (SSD) are also used as auxiliary storage devices instead of HDDs. SSDs use flash memory recording mediums and may have outer structures similar to HDDs. SDDs are renewal parts like HDDs.
[Patent Document 1] Japanese National Publication of International Patent Application No. 2002-516493 [Patent Document 2] Japanese Laid-open Utility Model Publication No. 62-094695

### DISCLOSURE OF THE INVENTION

### PROBLEMS TO BE SOLVED BY THE INVENTION

An object of the electronic apparatus described in the embodiment is to reduce excessive space used only for assembly of the electronic apparatus and replacement of components.

### MEANS FOR SOLVING PROBLEMS

An electronic apparatus disclosed in the present application includes a first electronic component, a second electronic component and a casing.

The first electronic component has a first connector on a side surface of the first electronic component.

The second electronic component has a second connector to be connected with the first connector.

A casing includes an internal space formed by a first face and a second face which mutually face and side faces bridging peripheries of the first face and the second face. The casing further has a first opening on the first face and a second opening on one of the side faces.

The first electronic component is accommodated in the casing from the first opening while arranging the first connector in a direction from the first opening to the second opening.

The second electronic component is accommodated in the casing by sliding the second electronic component from the second opening while arranging the second connector of the second electronic component in a direction toward the first electronic component accommodated in the casing so that the second connector is connected with the first connector.

### EFFECT OF THE INVENTION

According to the electronic apparatus of the embodiment, excessive space inside the casing can be reduced to miniaturize the electronic apparatus.

### BRIEF DESCRIPTION OF DRAWINGS

FIG. 1 is an outer perspective view of a notebook PC in a open form as an electronic apparatus of an embodiment.
FIG. 2 is a six-sided view of the notebook PC of FIG. 1 in a close form.
FIG. 3 is a perspective view of a main body unit of the notebook PC illustrated in FIG. 1 and FIG. 2.
FIG. 4 is a six sided view of the main body unit.
FIG. 5 illustrates a layout of an HDD and an ODD in a notebook PC as a comparative example.
FIG. 6 illustrates a way of accommodating the HDD in the notebook PC.
FIG. 7 is a perspective view illustrating a way of connecting the ODD and the HDD to the notebook PC of the embodiment.
FIG. 8 is a plan view illustrating a way of connecting the ODD and the HDD to the notebook PC of the embodiment.
FIG. 9 is an exploded perspective view of the HDD and a lid on a bottom surface side of the main body unit.
FIG. 10 is a perspective view of the notebook PC in which the ODD is slightly ejected to the outside.
FIG. 11 is a bottom view of the main body from which a casing member covering the bottom surface of the main body unit is removed.
FIG. 12 is a cross-sectional of FIG. 11 taken along and viewed in directions of arrows A-A.
FIG. 13 is a bottom view of the main body from which the casing member covering the bottom surface of the main body unit is removed.
FIG. 14 is a cross-sectional view of FIG. 13 taken along and viewed in directions of arrows A-A.
FIG. 15 is a perspective view of the main body unit from which a keyboard and an upper casing member covering the upper surface side of the main body unit are removed.
FIG. 16 is a plan view of the main body unit from which the keyboard and the upper casing member covering the upper surface side of the main body unit are removed.
FIG. 17 is a cross-sectional of FIG. 16 taken along and viewed in directions of arrows B-B.
FIG. 18 is a view corresponding to FIG. 15 in which the ODD is further pushed toward the inside of the main body unit.
FIG. 19 is a view corresponding to FIG. 16 in which the ODD is further pushed toward the inside of the main body unit.
FIG. 20 is a view corresponding to FIG. 17 in which the ODD is further pushed toward the inside of the main body unit.
FIG. 21 illustrates a space where the ODD is accommodated inside the main unit.
FIG. 22 is a perspective view of the ODD viewed from an upper surface side of the notebook PC.
FIG. 23 is a perspective view of the ODD viewed from a bottom surface side of the notebook PC.
FIG. 24 is a plan view illustrating an inside of the main body unit in which the ODD is ejected without the upper casing member.
FIG. 25 is a plan view of the main body unit without the upper casing member.
FIG. 26 is a plan view of the main body unit illustrated in FIG. 25 on which the upper casing member is mounted.
FIG. 27 illustrates an inside of the upper casing member and the main body unit without the upper casing member arranged side by side.
FIG. 28 illustrates a notebook PC as a comparative example, in which a FFC connecting connectors.
FIG. 29 is a plan view of the notebook PC of the embodiment illustrating the inside of the notebook PC without the upper casing member.
FIG. 30 is a cross-sectional of FIG. 29 taken along and viewed in directions of arrows A-A.
FIG. 31 is a cross-sectional of FIG. 29 taken along and viewed in directions of arrows B-B.
FIG. 32 is a perspective view of one of two FFCs and proximity thereof.
FIG. 33 is a perspective view of the one of the FFCs.
FIG. 34 is a six sided view of the one of the FFCs.
FIG. 35 is a cross-sectional view of the main body unit, in which the upper casing member is provided over the FFC illustrated in FIG. 32 to FIG. 34 and a keyboard is further mounted, taken along and viewed in directions of arrows A-A of FIG. 29.
FIG. 36 is a perspective view of the FFC as a modified example.
FIG. 37 is a six sided view of the FFC as the modified example.
FIG. 38 is a perspective view of the other one of the two FFCs and proximity thereof.
FIG. 39 is a perspective view of the other one of the two FFCs.
FIG. 40 is a six sided view of the other one of the two FFCs.
FIG. 41 is a perspective view of the FFC as another modified example.
FIG. 42 is a six sided view of the FFC as the other modified example.
FIG. 43 illustrates two FFCs inversely connected.

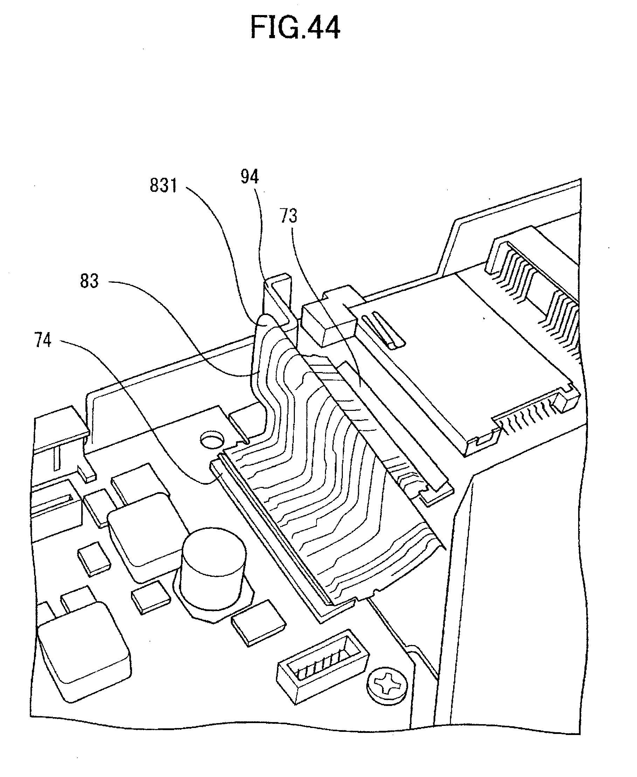

FIG. 44 is a perspective view of one of two FFCs illustrated in FIG. 43 and proximity thereof.
FIG. 45 illustrates a modified structural example of the FFC and proximity thereof.

### BEST MODE FOR CARRYING OUT THE INVENTION

Hereinafter, a description of embodiments is given.

### (Exterior Appearance)

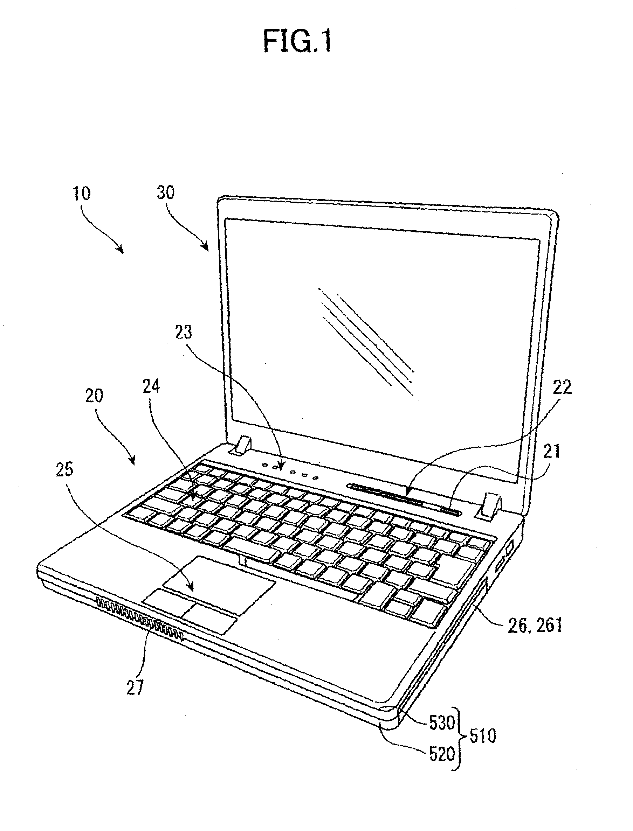

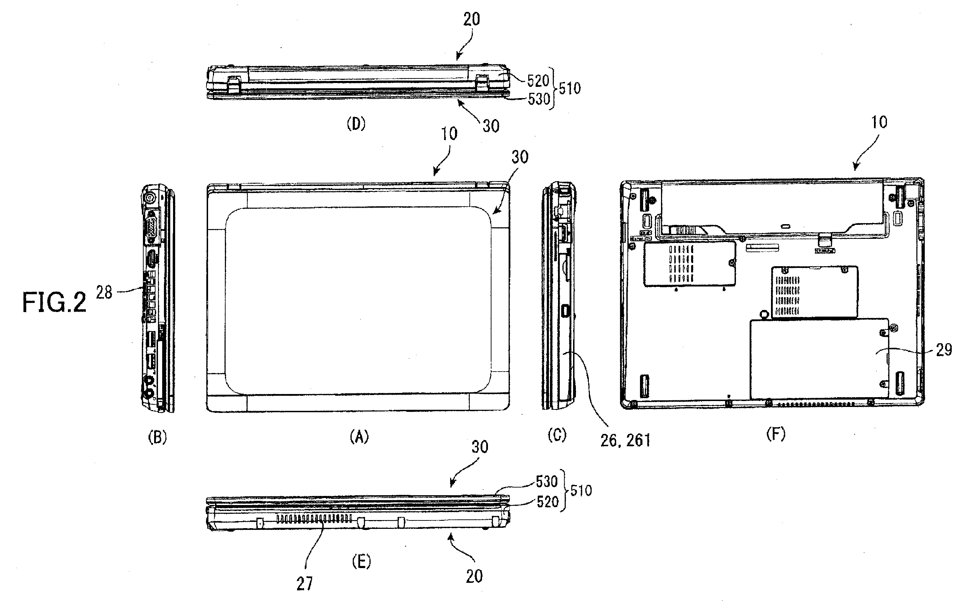

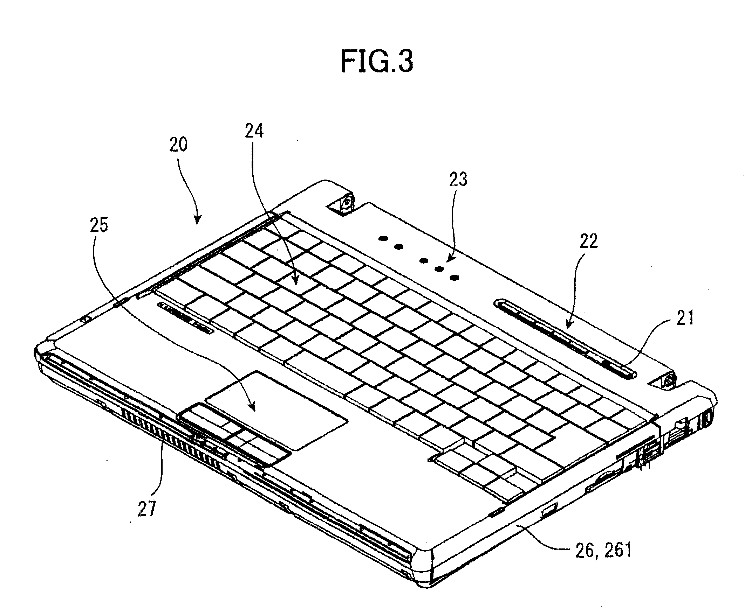

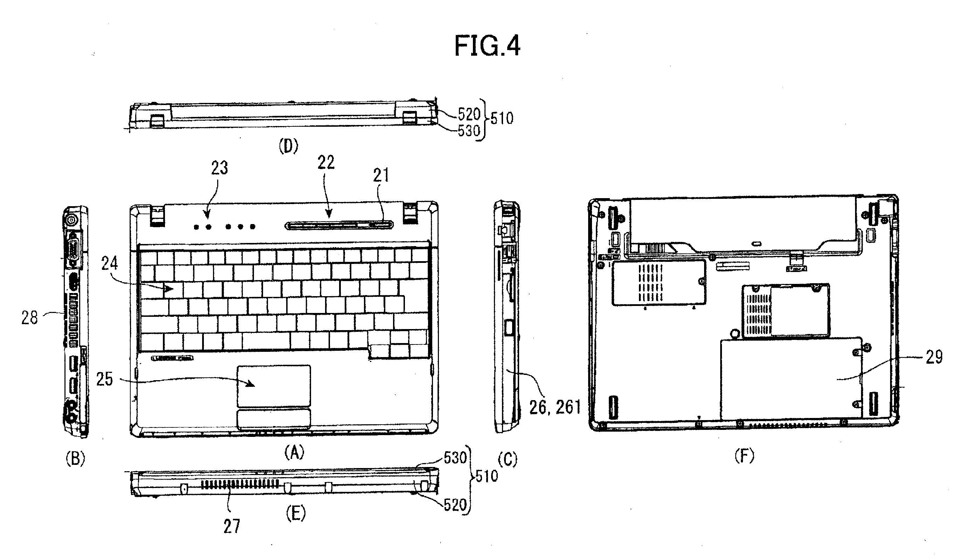

FIG. 1 is an exterior perspective view of a notebook PC in an open form as an electronic apparatus of an embodiment. FIG. 2 is a six sided view of a notebook PC in a close form illustrated in FIG. 1. FIG. 3 is a perspective view of the main body unit of the notebook PC illustrated in FIG. 1 and FIG. 2. FIG. 4 is a six sided view of the main body unit. Referring to FIG. 2 and FIG. 4, (A) is a plan view; (B) is a left side view, (C) is a right side view; (D) is a back view; (E) is a front view; and (F) is a bottom view.

As illustrated in FIG. 1, the notebook PC 10 includes a main body unit 20 and a display unit 30. The display unit 30 is supported by the main body unit 20 so as to be freely opened and closed between the open form illustrated in FIG. 1 and a close form illustrated in FIG. 2.

The main body unit 20 includes a casing 510 formed by a lower casing member 520, an upper casing member 530, and side surfaces surrounding peripheral edges of the lower casing member 520 and the upper casing member 530. The internal space is formed among the lower casing member 520, the upper casing member 530, and the side surfaces. A power button 21, plural function buttons 22, plural indicators 23, a keyboard 24, and a touch pad 25 are provided on the upper surface of the main body unit 20. The casing has an opening in which an optical disk drive 26 (hereinafter, referred to as an "ODD") accommodated by being slid into the opening on the right side surface of the optical disk drive 26. An outer face 261 of the accommodated ODD 26 is exposed from the opening and several connectors or the like are arranged inside the opening. Further, an intake vent 27 is formed on a front end surface of the main body unit 20. An exhaust vent 28 is formed on a left sid surface of the main body unit 20.

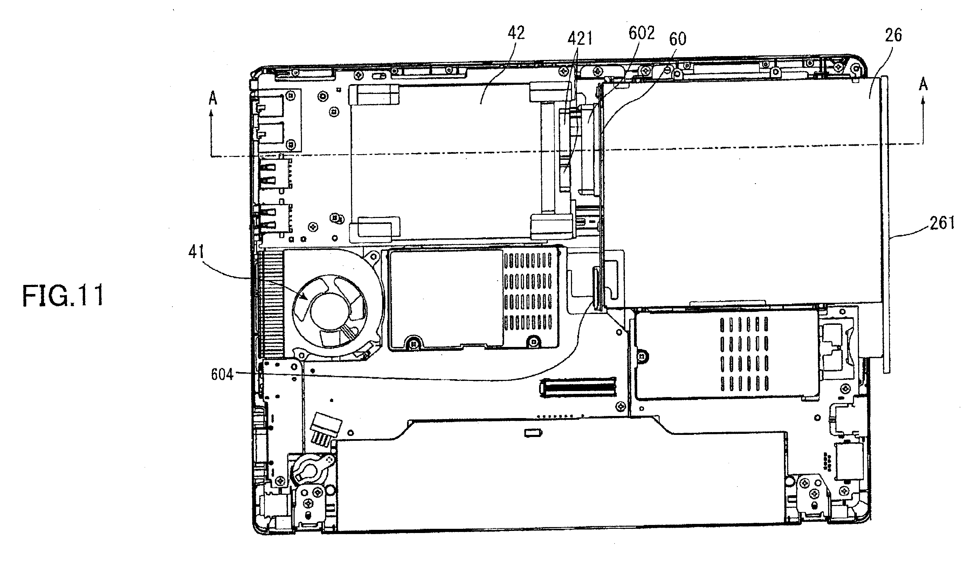

A fan 41 is integrated in the main body unit 20 as illustrated in FIG. 11. If the fan 41 is rotated, air is suctioned from the intake vent 27 to thereby cool electronic components inside the main body unit 20 and the suctioned air is exhausted from the exhaust vent 28. On the left side of the main body unit 20, not only the exhaust vent but also various connectors are arranged. Detailed descriptions of types and positions of the connectors are omitted here.

Referring to (F) in FIG. 2 and (F) in FIG. 4, an opening accommodating an HDD is formed on a bottom surface of the main body unit 20. A lid 29 covering the opening is illustrated in (F) of FIG. 1 and (F) of FIG. 3.

A central processing unit (CPU) for executing a program is installed on the main body unit 20. When the program is executed by the CPU of the main body unit 20, arithmetic processing corresponding to the program is performed.

### (Method of accommodating HDD)

An HDD is exemplified in the following explanation. However, an auxiliary storage device such as a solid state drive (SSD) may be used instead of the HDD. The SSD includes a flash memory as a recording medium, is shaped like a HDD and is a renewal part in a similar manner to the HDD. Another kind of the electronic component having an exterior structure similar to the auxiliary storage device may be used instead of the auxiliary storage device.

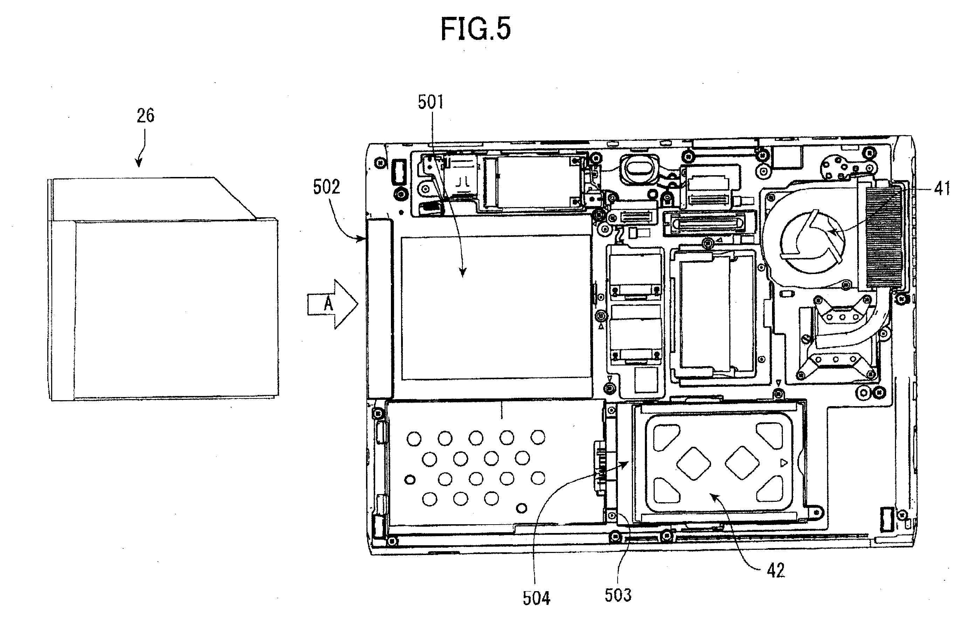

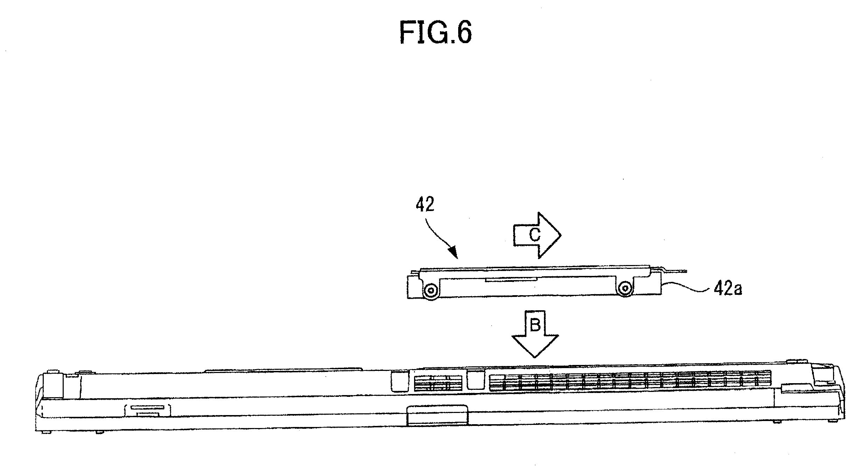

FIG. 5 illustrates a layout of an HDD and an ODD accommodated in a notebook PC as a comparative example. FIG. 6 illustrates a way of accommodating the HDD in the notebook PC of the comparative example illustrated in FIG. 5. FIG. 5 illustrate an accommodated HDD 42 and an ODD 26 which is not accommodated in the ODD accommodating portion 501 yet. Although the fan 41 and various other components are arranged in the notebook PC illustrated in FIG. 5, description of these is omitted.

The ODD 26 is slid in the direction of an arrow A in FIG. 5 so as to be accommodated inside an ODD accommodating portion 501 from an ODD accommodating area 502 provided on a side surface of the main body unit.

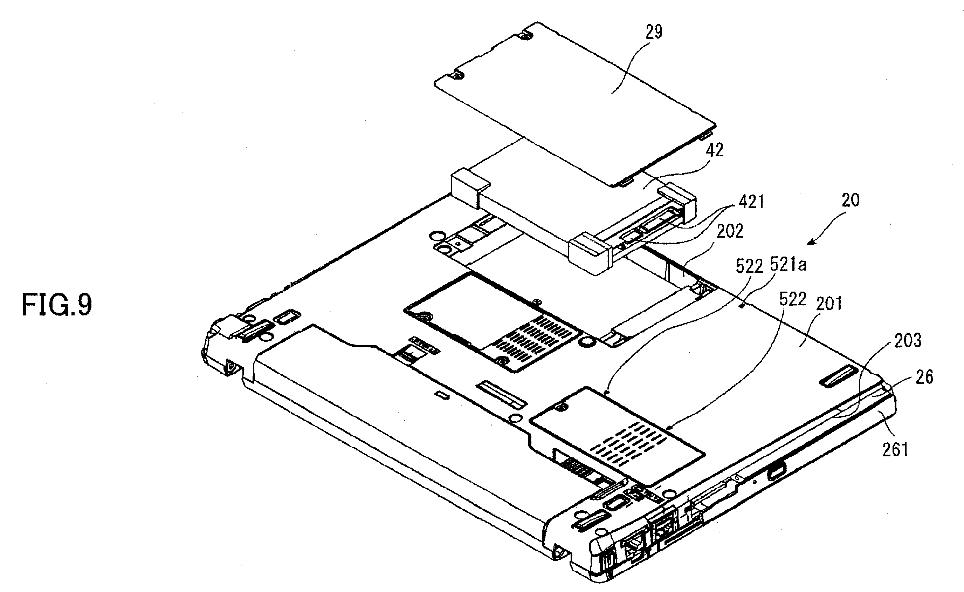

The HDD 42 is accommodated in a HDD accommodating area 503 provided on a bottom surface of the main body unit. A connector 421 (see FIG. 9) is provided on a front end surface of the HDD 42. Therefore, when the HDD 42 is accommodated, the HDD 42 is placed in the direction of an arrow B of FIG. 6. The HDD 42 is slid in the direction of an arrow C as illustrated in FIG. 6 so that the connector 421 of the front end surface 42a is engaged with a body side connector (not illustrated). Therefore, a gap 504 illustrated in FIG. 5 is formed on a back end surface side of the HDD 42 in the HDD accommodating area 503. The gap 504 is not used after the HDD 42 is accommodated in the main body unit and until the HDD 42 is replaced. However, since the gap 504 is used at times of accommodating and replacing the HDD 42, another component or the like may not be arranged in the gap 504. Therefore, the gap 504 is a dead space which is not used while the notebook PC runs.

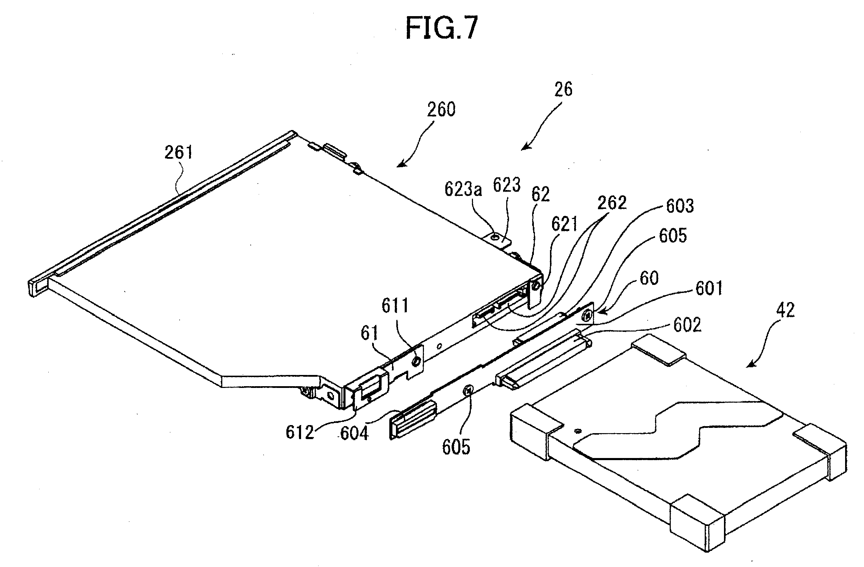

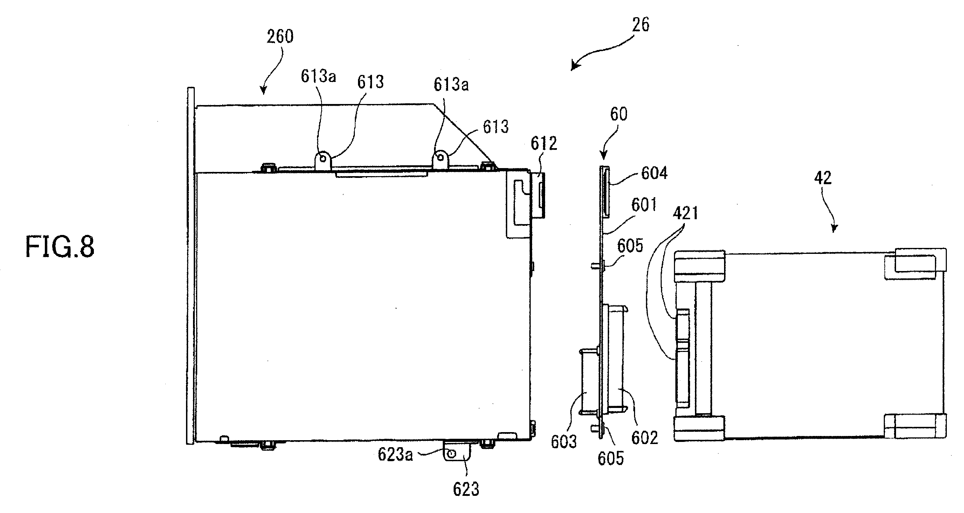

It is sought in notebook PCs compactness and weight saving. Therefore, many components are densely accommodated in the notebook PC. Under the situation, the above described dead space relates to the compactness and the weight saving. There is no dead space in the notebook PC of the embodiment. FIG. 7 is a perspective view illustrating a connection method of connecting the ODD 26 to the HDD 42 of the notebook PC of the embodiment. FIG. 8 is a plan view illustrating the connection method of connecting the ODD 26 to the HDD 42 of the notebook PC 10 of the embodiment. The ODD 26 includes an ODD main body 260 and a circuit board 60. An optical disk shaped like a disk is removably and replaceably loaded on the ODD main body 260. The ODD main body 260 has a function of accessing the optical disk while rotating the loaded optical disk. A connector 262 is provided on the front end surface of the ODD main body 260 to receive power supply from an outside of the ODD main body 260 and send or receive signals between the ODD main body 260 and the outside. Further, the ODD main body 260 includes a fixing piece 61 in which a thread hole 611 and a hook 612 for supporting the circuit board 60 are provided and a fixing piece 2 in which a thread hole 621 is provided. These fixing pieces 61 and 62 are fixed to a side surface of the ODD main body 260. The fixing piece 61 has two fixing tabs 613 on its side surface so as to project from a side surface of the ODD main body 260. Surfaces of these fixing tabs 613 are substantially on the same plan as the lower surface of the main body 260 illustrated in FIG. 7 (the upper surface of the main body 260 illustrated in FIG. 8). The thread holes 613a are formed in the fixing tabs 613, respectively. The ODD 26 is fixed by screws to a casing member on the bottom surface side of a casing of the main body unit 20 (see FIG. 1) using thread holes 613a formed in the fixing tabs 613. The other fixing piece 62 has a fixing tab 623 on its side surface so as to project from a side surface of the ODD main body 260. The fixing tab 623 is provided to fix the ODD 26 to the notebook PC 10. The fixing tab 623 is positioned near the upper surface of the ODD main body 260 in FIG. 7 (the bottom surface of the ODD main body 260). A hole 623a formed in a center of the fixing tab 623 is a through hole and is not a thread hole. The fixing tab 623 is sandwiched between the casing member on the bottom surface side and the casing member on the upper surface side forming the main body unit 20. A screw inserted from the casing member on the bottom surface side penetrates through a hole 623a, and the fixing tab is fixed together with the casing member on the upper surface side. A method for fixing the ODD 26 is described later. By fixing a part of the cramping tabs together with the the casing members, the number of fixing screws can be reduced and assembling man-hour can also be reduced.

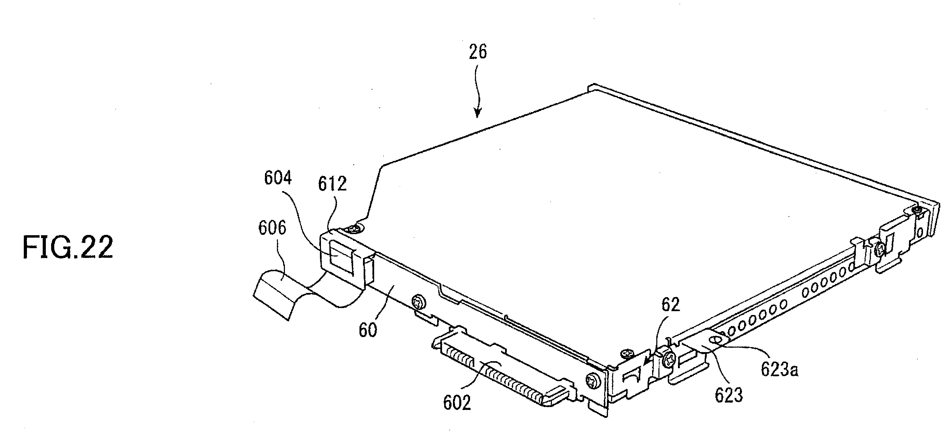

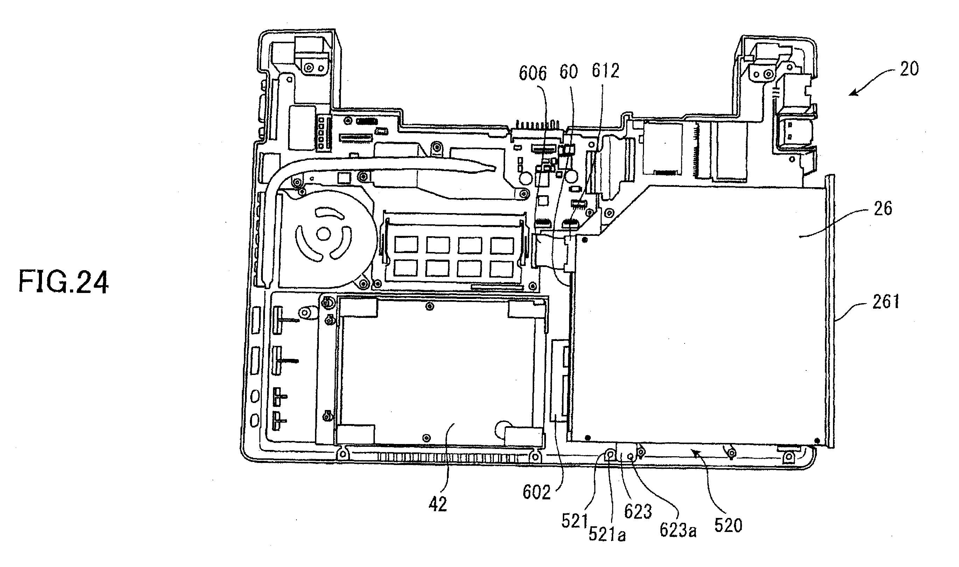

Before describing the circuit board 60, the HDD 42 is described. The HDD 42 includes a built-in hard disk in a disk-like shape (not illustrated). The HDD 42 has a function of accessing the hard disk while rotating the built-in hard disk with the motor. The HDD 42 has the connector on the front end surface as illustrated in FIG. 8. Through the connector 421, electric power may be supplied from the outside. The signals are sent and received through the connector between the HDD 42 and the outside. The circuit board 60 is a part of the ODD 26. The circuit board 60 is fixed by two screws 605, 605 to thread holes 611 and 621 formed in the fixing pieces 61, 62, respectively. When the circuit board 60 is fixed to the ODD main body 260, a connector 604 (described below) is engaged with a hook 612 of the fixing piece 61 (see FIG. 22). The circuit board 60 includes a connector 602 to be connected to a connector 421 at a position opposite to the connector 421 formed on the front end surface of the HDD 42. The circuit board 60 includes a connector 603 to be connected to a connector 262 at a position opposite to the connector 262 formed on the front end surface of the ODD main body 260. The circuit board 60 includes another connector 604. The connector 604 is connected to the connectors 602 and 603 by wiring (not illustrated) in the circuit board 60. The connector 604 is connected to electronic circuit elements other than the HDD 42 and the ODD 26 inside the main body unit 20 (see FIG. 1). The connector receives power supplied to the HDD 42 and the ODD 26 and connect signal lines of the HDD 42 and the ODD 26 to the electronic circuit elements other than the HDD 42 and the ODD 26. The connector 604 is connected to an end of a flexible flat cable (FFC) (see FIG. 22 and FIG. 24). The connector 604 is connected to electronic circuit elements other than the ODD.

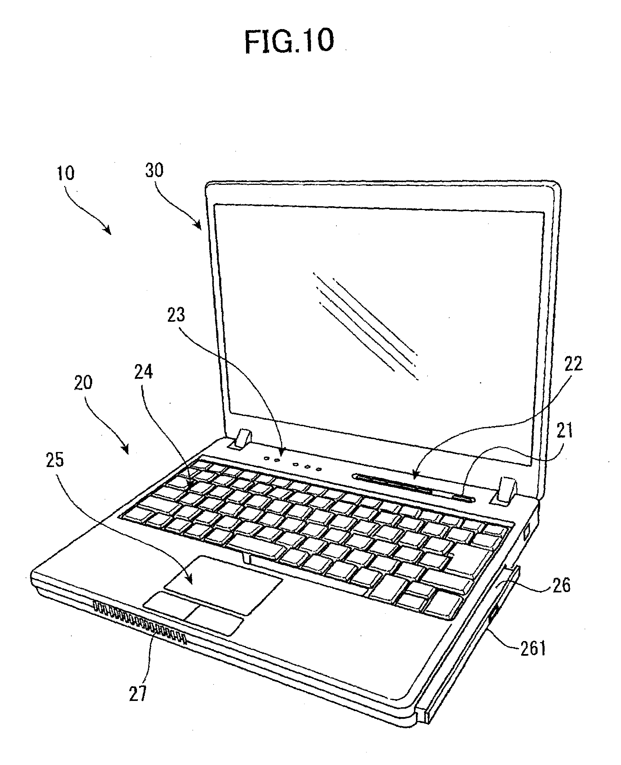

FIG. 9 is an exploded perspective view of the HDD and a lid on a bottom surface side of the main body unit. FIG. 10 is a perspective view of the notebook PC illustrated in FIG. 1 which is in the open form.

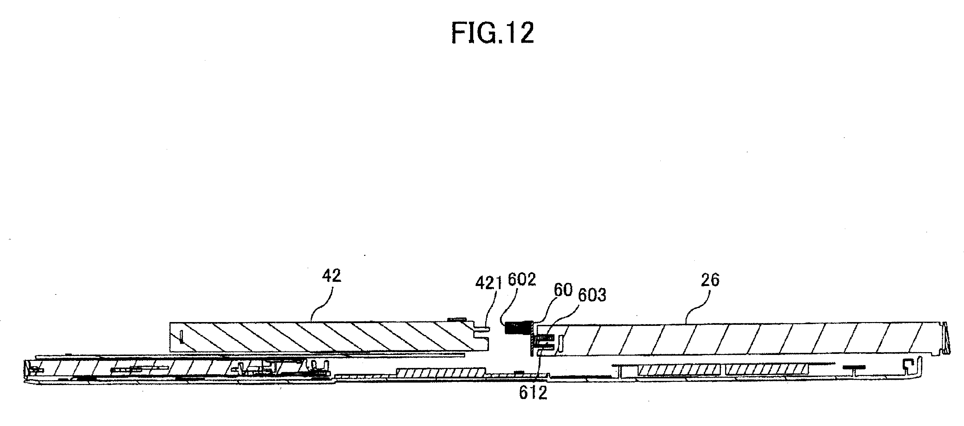

FIG. 11 is a bottom view of the notebook PC 10 from which a casing member covering the bottom surface side of the main body unit is removed to expose an inside of the main body unit. FIG. 12 is a cross-sectional view of the notebook PC 10 illustrated in FIG. 11 taken along a one-dot chain line and viewed in a direction of arrows A, A. Referring to FIG. 9 to FIG. 12, the ODD 26 is partly ejected from the casing of the main body unit. As illustrated in FIG. 9, the opening 202 is formed to accommodate the HDD 42 on a bottom surface of the main body unit 20. The HDD 42 is accommodated in the casing of the main body unit 20 from the opening 202. When the HDD 42 is accommodated in the casing from the opening 203, the ODD 26 slightly protrudes from the opening 203 formed on the side surface (the right side surface illustrated in FIG. 10) of the main body unit 20. As described, since the ODD 26 slightly protrudes from the side surface of the main body unit, a space is formed inside the casing of the main body unit 20. Due to the space, the HDD 42 can be accommodated in the casing of the main body unit 20 from the opening 202 without interfering with the connector 602 installed on the circuit board 60 on the side of the ODD 26.

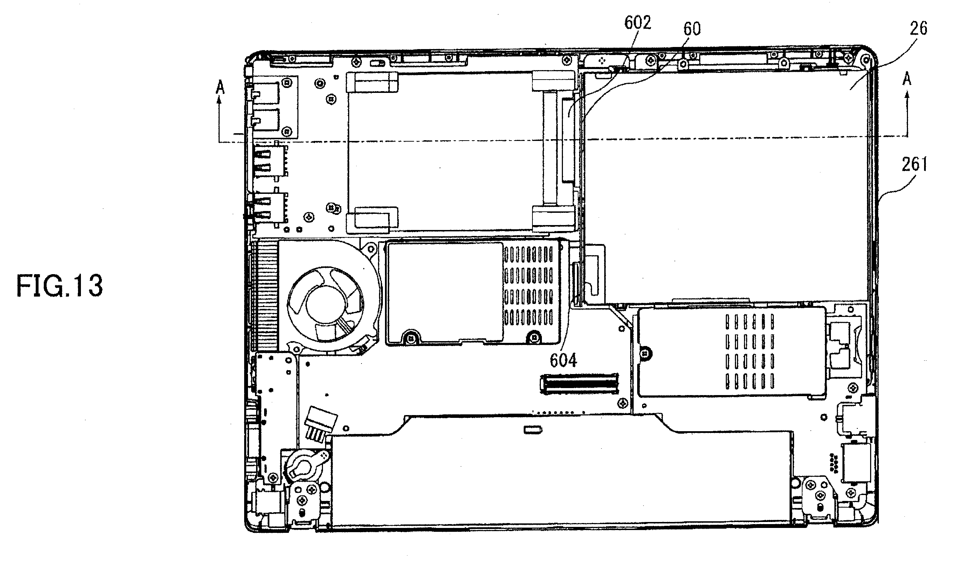

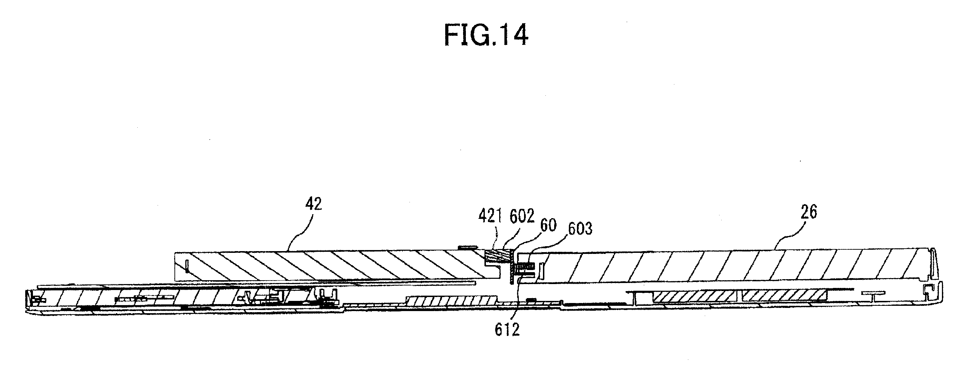

FIG. 13 is a bottom view of the main body from which the casing member covering the bottom surface of the main body unit is removed in a similar manner to FIG. 11. Referring to FIG. 13, the ODD 26 is pushed inside the casing of the main body unit. FIG. 14 is a cross-sectional view of the notebook PC 10 illustrated in FIG. 13 taken along a dot chain line and viewed in directions of arrows A, A.

The HDD 42 is accommodated in the casing of the main body unit 20 from the opening 202 while directing the connector 421 on the front end surface of the HDD 42 toward the ODD 26 when the ODD 26 slightly protrudes from the side surface of the main body unit 20. Thereafter, the ODD 26 is pushed so that the outer surface 261 of the ODD 26 is on the same plane as that of the side surface of the casing. Then, as described in reference to FIG. 7 and FIG. 8, the connector 602 installed on the circuit board 60 which is fixed to the ODD main body 260 is connected to the connector 421 provided on the front end surface of the HDD 42. With this, the ODD 26 is accommodated in the casing of the main body unit 20. As described, the HDD 42 is accommodated in the HDD 42 using the space generated by protruding the main body unit 20 from the casing 510. Therefore, the HDD 24 can be accommodated in the opening 202 by linear movement in a direction perpendicular to the opening 202. Therefore, the motions described in reference to FIG. 5 and FIG. 6 such that the HDD 42 is placed in a HDD accommodating area 503 in the direction B and thereafter is slid in the direction C are not performed to thereby prevent excessive space from forming.

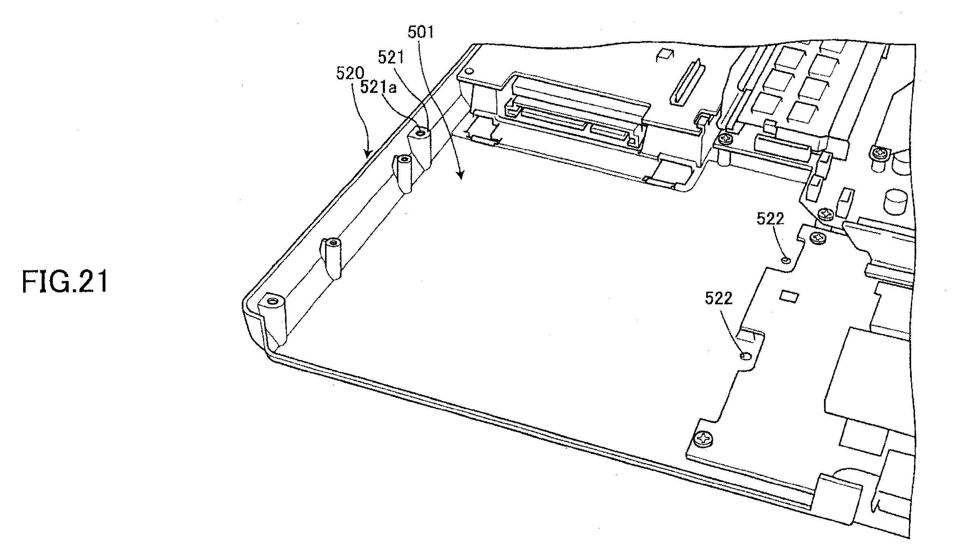

Referring to FIG. 9, the opening 202 accommodating the HDD 42 is covered by the lid 29. The lid 29 is fixed to the main body unit 20 by a screw cramp. Referring to FIG. 9 and FIG. 21, the ODD 211 is pushed inside the casing 510 and fixed by a screw cramp by screws inserted into three attaching holes 521a, 522, and 522.

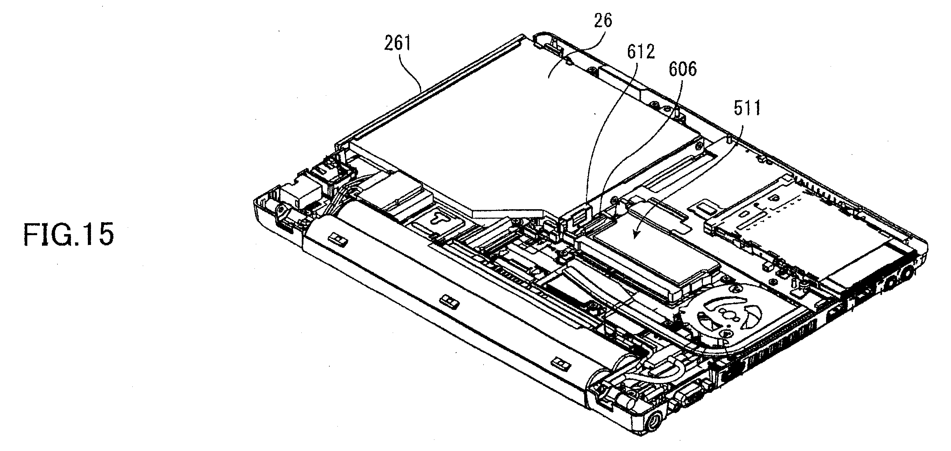

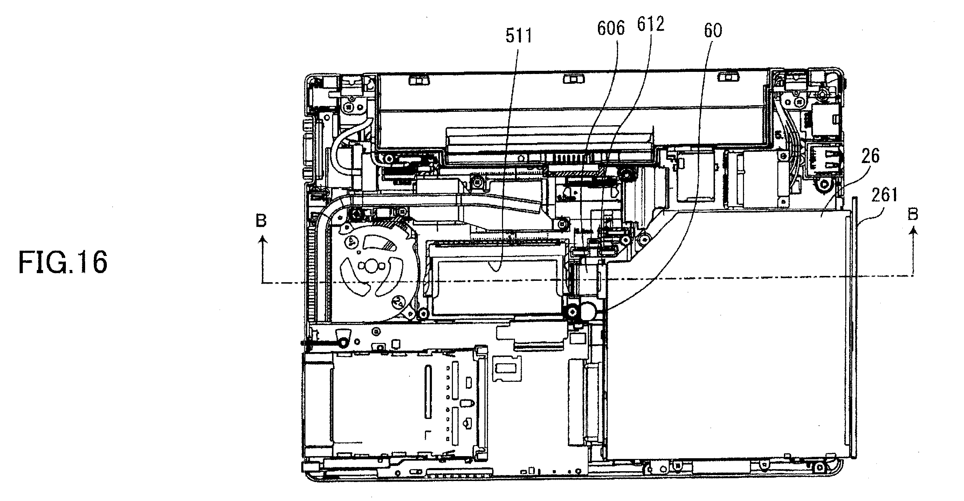

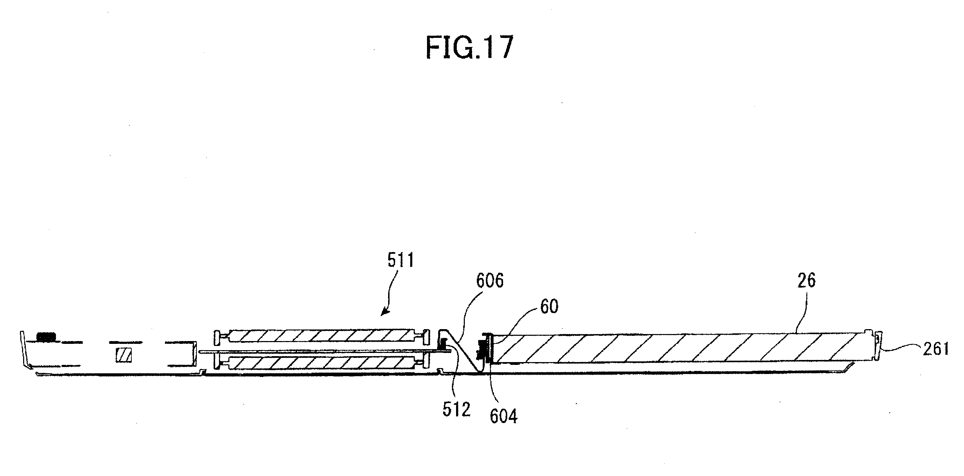

FIG. 15 and FIG. 16 are a perspective view and a plan view of the main body unit 20 from which a keyboard and an upper casing member 530 covering the upper surface side of the main body unit 20 are removed. FIG. 17 is a cross-sectional of FIG. 16 taken along a dot chain line and viewed in directions of arrows B, B.

Referring to FIG. 15 to FIG. 17, the ODD 26 protrudes from the side surface of the main body unit.

As described, the connector 604 is installed on the circuit board 60 illustrated in FIG. 7 and FIG. 8. Referring to FIG. 17, the connector 604 is connected to electronic circuit elements other than the HDD 42 and the ODD 26 via the FFC 606. The connector 604 includes a connector body, a terminal and a flap. A terminal of the FFC is electrically connected to the connector of the connector body by the flap. With the embodiment, the connector 512 is installed on the memory board 511 in which a memory is installed as illustrated in FIG. 17. The connector 604 on the circuit board 60 on the side of the ODD 26 is connected to the connector 512 via the FFC 606. Referring to FIG. 15 to FIG. 17, the ODD 26 protrudes from the side surface of the main body unit. Under this situation, the connector 604 receives tension in a direction of pulling the connector 604 apart from the circuit board 60 by rigidity (force of restitution) of the FFC 606. A hook 612 provided in the fixing piece 61 illustrated in FIG. 7 supports the connector 604 to prevent malfunction such as disconnection of the connector 604 from the circuit board 60 by the tensile. The hook 612 prevents the flap from disconnecting from the connector main body by the reactive force of the tension. It is also possible to prevent the FFC 606 from disconnecting by the hook 612.

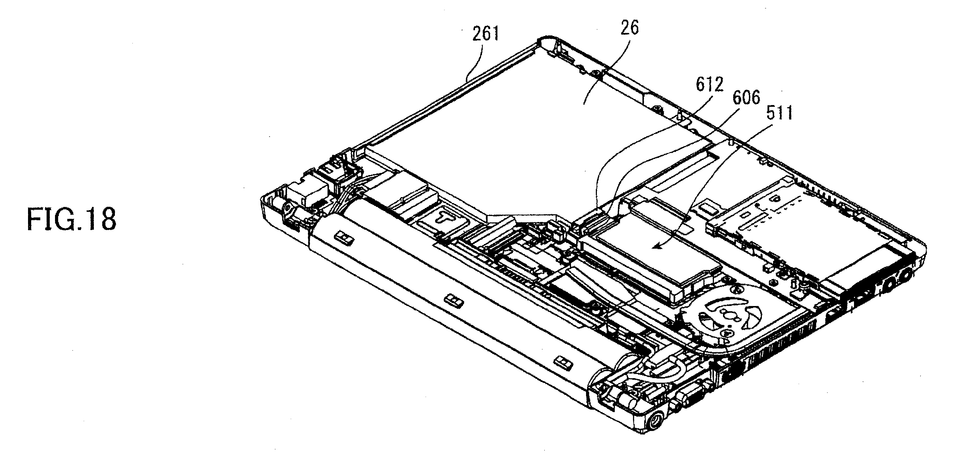

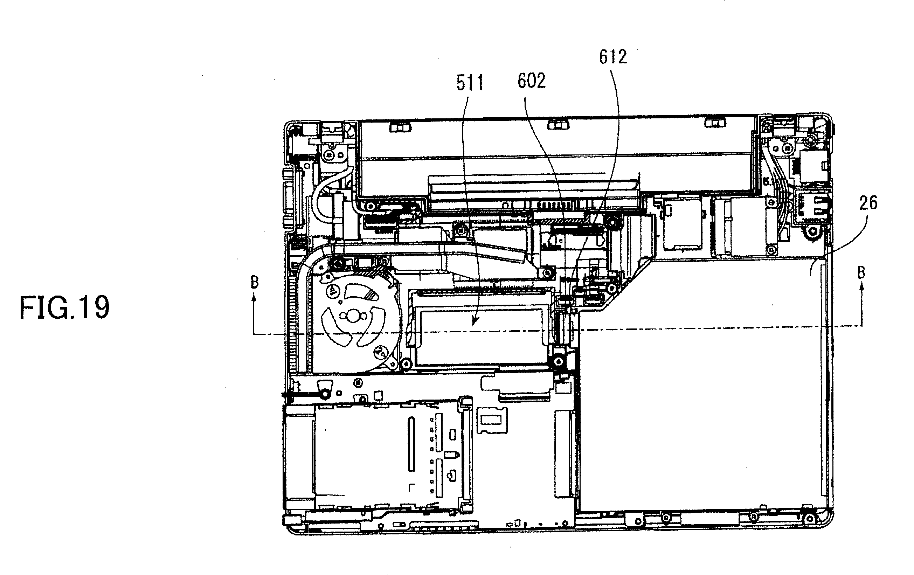

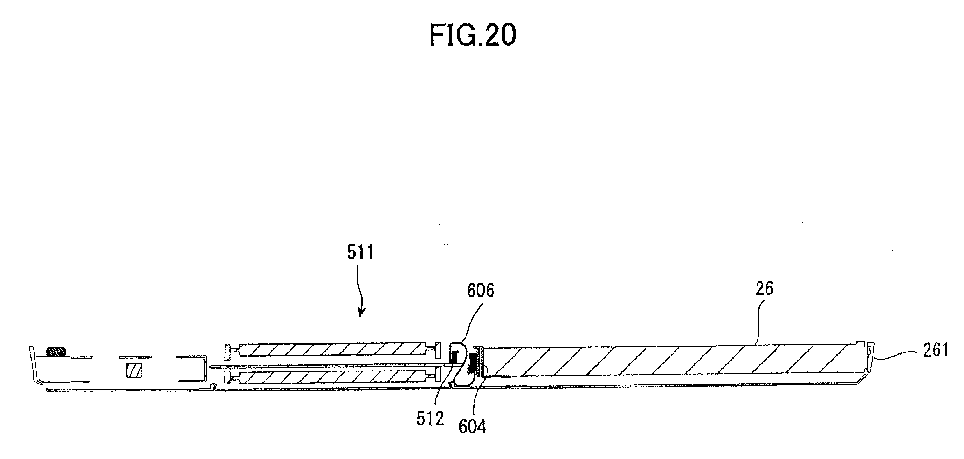

FIG. 18, FIG. 19 and FIG. 20 correspond to FIG. 15, FIG. 16 and FIG. 17, respectively. Referring to FIG. 18, FIG. 19 and FIG. 20, the ODD 26 is pushed inside the main body unit 20 from the states illustrated in FIG. 15, FIG. 16 and FIG. 17, respectively. When the ODD 26 is pushed inside the casing 510 of the main body unit 20, the FFC 606 is folded as illustrated in FIG. 20. At this time, the connector 421 on the HDD side and the connector 602 of the circuit board on the ODD side are connected (see FIG. 14).

Next, a structure of screwing to cramp the ODD 26 is described. The structure of screwing to cramp the ODD 26 is briefly described above in reference of FIG. 7 and FIG. 8. The structure is described in detail. FIG. 21 illustrates a space where the ODD 26 is accommodated inside the main unit 20. The lower casing member 520 forming the casing 510 of the main body unit 20 is illustrated in FIG. 21. Referring to FIG. 24, the ODD 26 is accommodated in the ODD accommodating portion 501 by sliding the ODD 26 from the side surface of the main body unit 20. Referring to FIG. 21 and FIG. 24, the ODD 26 accommodated in the ODD accommodating portion 501 is clamped by three screws (not illustrated) passing through the attaching hole opened in a boss 521 which is provided in the lower casing member 520 and the two attaching holes 522 formed in a bottom portion of the lower casing member 520.

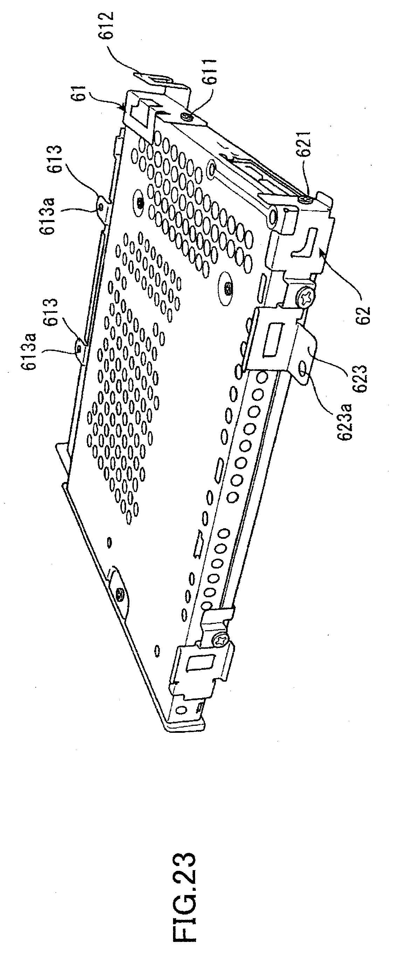

FIG. 22 is a perspective view of the ODD 26 viewed from an upper surface side of the notebook PC 10. FIG. 23 is a perspective view of the ODD 26 viewed from the bottom surface side of the notebook PC 10. Referring to FIG. 22, the circuit board 60 is fixed to the ODD 26. Referring to FIG. 23, the circuit board 60 is detached from the ODD 26.

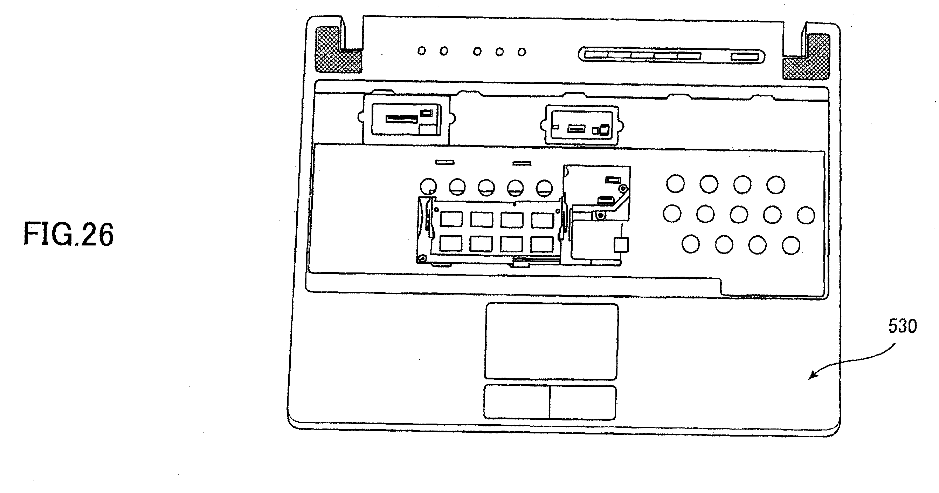

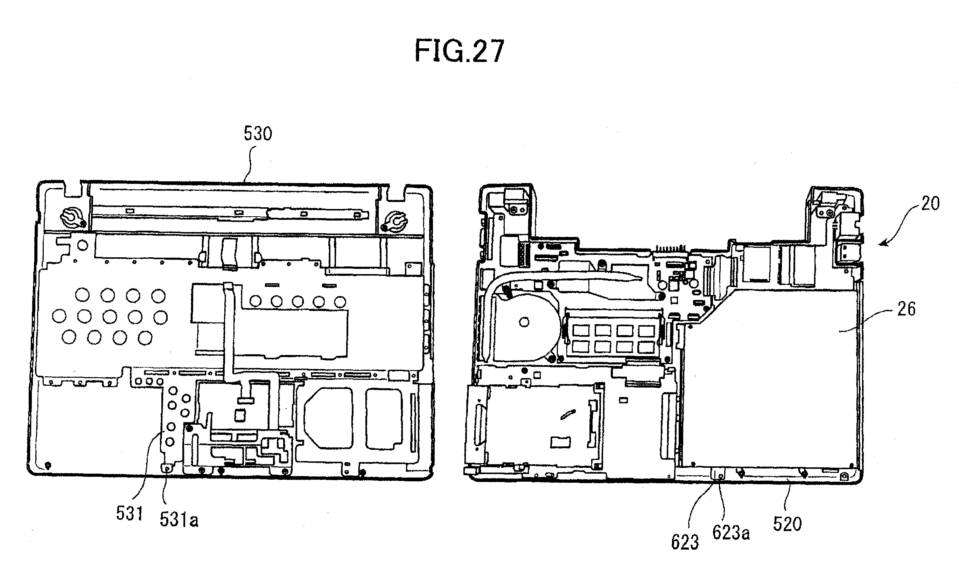

Referring back to FIG. 7 and 8, the fixing piece 62 includes a fixing tab 623 at a position close to the upper surface of the ODD 26, and the hole 623a is opened in the fixing tab 623. When the ODD 26 is accommodated in the accommodating portion 501 illustrated in FIG. 21, the fixing tab 623 is located in the boss 521 to cause the hole 623a opened in the fixing tab 623 to align with the attaching hole 521a opened in the boss 521. The upper casing member 530 of the casing 510 of the main body unit 20 illustrated in FIG. 26 and FIG. 27 covers the ODD 26. The upper casing member 530 is fixed to the lower casing member 520 by a screw cramp using screws inserted from the bottom surface of the lower casing member 520. Simultaneously, the fixing tab 623 of the fixing piece 62 of the ODD 26 is cramped together with the upper casing member 530 to thereby connect the fixing tab 623 and the upper casing member 530 with the lower casing member 520.

Referring back to FIG. 7 and FIG. 8, the fixing piece 61 includes two fixing tabs 613 at a position substantially the same height as that of the bottom surface of the ODD main body. The fixing tabs 613 have the thread holes 613a, respectively. When the ODD 26 is accommodated in the ODD accommodating portion illustrated in FIG.21, the two fixing tabs 613 are placed on the two attaching holes 522 at the bottom portion of the lower casing member 520 so that the thread holes 613a align with the attaching holes 522. Under the state, the screws are inserted from the bottom surface of the lower casing member 520. By the screws, the fixing tabs 613 are fixed to the lower casing member 520. The fixing tabs 613 and the upper casing member 530 are independently fixed to the lower casing member 520.

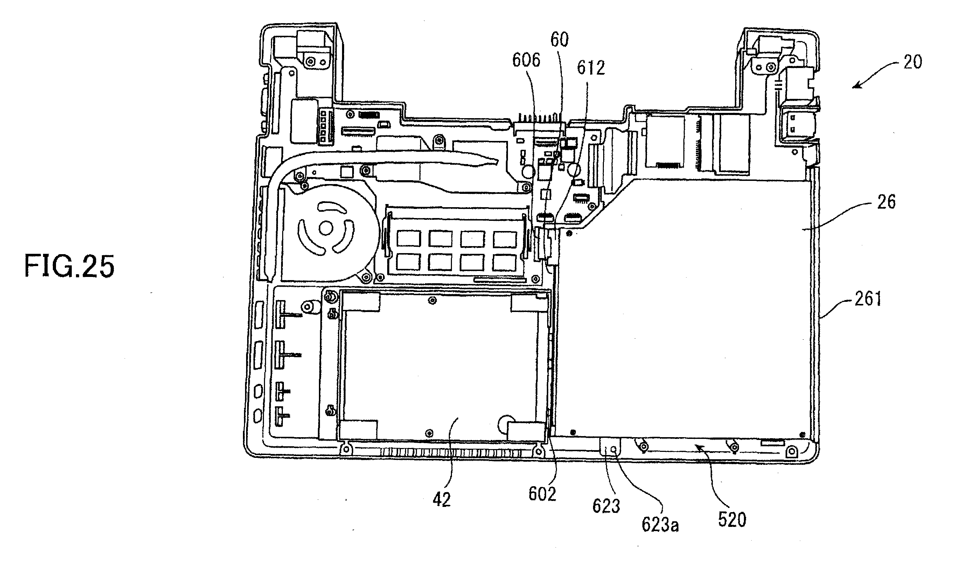

FIG. 24 and FIG. 25 are plan views of the main body unit 20 without the upper casing member 530. FIG. 24 illustrates a state in which the ODD 26 protrudes form the side surface of the main body unit. FIG. 25 illustrates a state in which the ODD is accommodated in the main body unit 20.

When the ODD 26 protrudes from the side surface of the main body unit 20, the fixing tab 623 is located apart from the boss 521 formed in the casing member 520. When the ODD 26 is pushed from the state illustrated in FIG. 24 to a normal accommodating position, the fixing tab 623 overlaps the boss 521 and the hole 623a opened in the fixing tab 623 aligns with the attaching hole 521a formed in the boss 521.

FIG. 26 is a plan view of the main body unit 20 illustrated in FIG. 25 on which the upper casing member 530 is mounted. FIG. 27 illustrates an inside of the upper casing member 530 and the main body unit 20 without the upper casing member 530 arranged side by side.

A sheet metal member 531 extends inside the upper casing member 530. The sheet metal member 531 has a thread hole 531a overlapping the hole 521a (see FIG. 24) of the boss 521 on the lower casing member 520 when the upper casing member 530 covers the main body unit 20 as illustrated in FIG. 26. The upper casing member 530 and the ODD 26 are clamped together to be connected with the lower casing member 520 by placing the upper casing member 530 on the ODD 26 after pushing the ODD 26 to the correct accommodating position illustrated in FIG. 25, and inserting the screw into the attaching hole 521a of the boss 521 from the bottom surface of the lower casing member 520 to pass through the hole 623a of the fixing tab 623 and finally be threaded into the thread hole 531. As described, the ODD 26 is fixed to the lower casing member 520 by the fixing tabs 623 and the two fixing tabs 613, 613 as illustrated in FIG. 23. The upper casing member 530 is connected to the lower casing member 520 at positions other than the positions clamped together with the fixing tab 623 by screw clamp. However, description of the screw clamp at the other positions is omitted. The keyboard 24 (see FIG. 1) is installed on the upper casing member 530 fixed to the lower casing member 520 to thereby complete the main body unit 20 illustrated in FIG. 1. The fixing tab 623 of the ODD 26 is cramped together with the upper casing member 530 thereby reducing the number of the screws and the assembling man-hour.

### (Shape of FFC)

Next, the shape of the flexible flat cable (FFC) connecting the connectors inside the main body unit 20 is described.

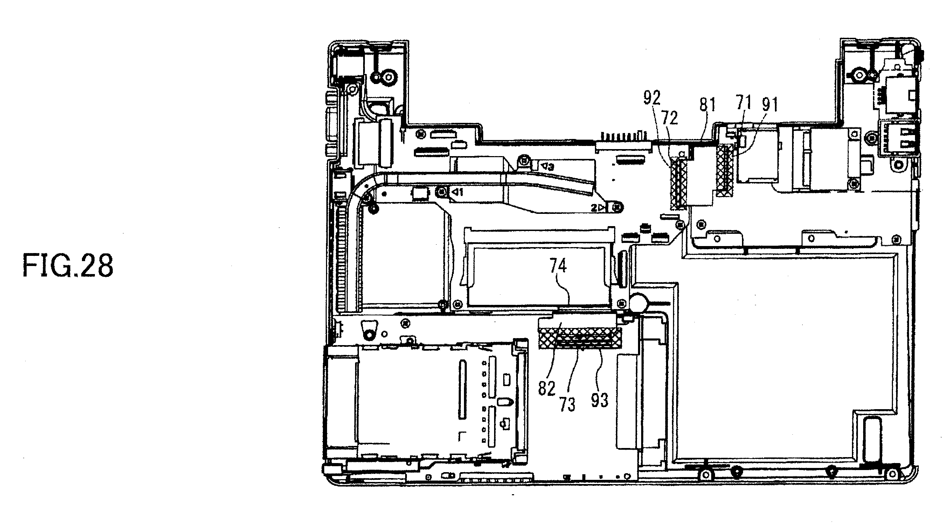

FIG. 28 illustrates a notebook PC as a comparative example, in which a FFC connecting connectors is illustrated.

Referring to FIG. 28, two connectors 71 and 72, a FFC 81 and adhesive tapes 91 and 92 are illustrated. An end of the FFC 81 is inserted into one connector 71 of the connectors 71 and 72 so as to be electrically connected. Another end of the FFC 81 is inserted into the other connector 72 of the connectors 72 and 72 so as to be electrically connected. Further, the connector 71 and an area in the vicinity of the end of the FFC 81 inserted in the connector 71 are fixed by the adhesive tape 91. In a similar manner thereto, the connector 72 and an area in the vicinity of the other end of the FFC 81 inserted in the connector 72 are fixed by the adhesive tape 92. By the adhesive tapes 91 and 92, the FFC 81 is prevented from being disconnected from the connectors 71 and 72 to ensure reliability of the connection. The two connectors 73 and 74 are similarly structured. An end and the other end (opposing ends) of the FFC 82 are joined to the connectors 73 and 74 respectively to electrically connect the connectors 73 and 74 via the FFC 82. Further, an adhesive tape 93 is attached to an upper portion of the connector 73 and the proximity thereof to prevent the FFC 82 from being disconnected from the connector 73.

If the adhesive tapes 92 and 93 are used in order to prevent the FFC from being disconnected from the connector, the cost for the adhesive tape and the man-hours for attaching the adhesive tapes cause a cost increase to occur. With the embodiment, the FFC is prevented from being disconnected without adding an additional part.

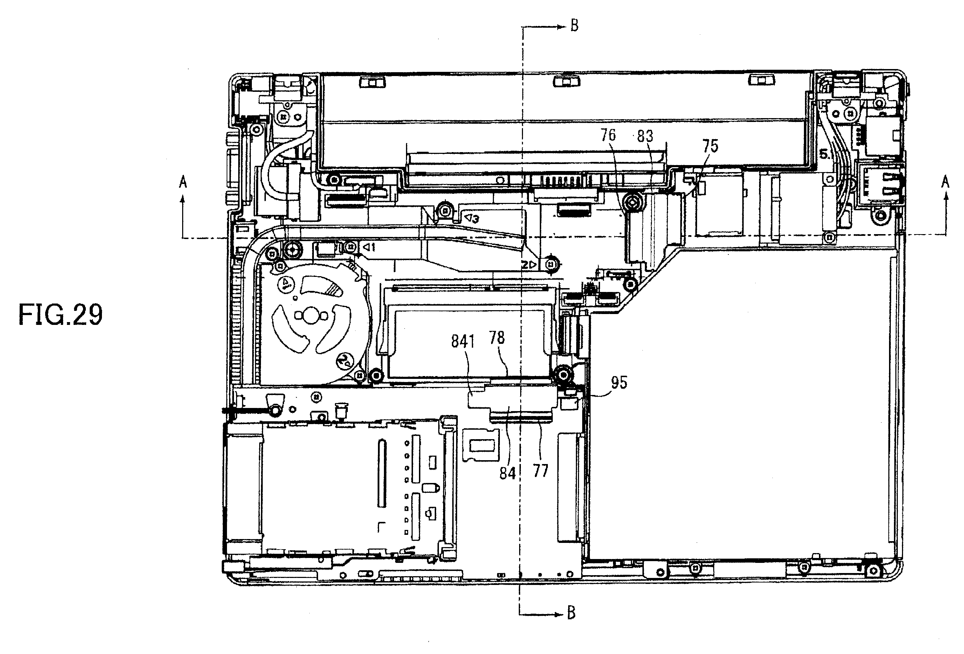

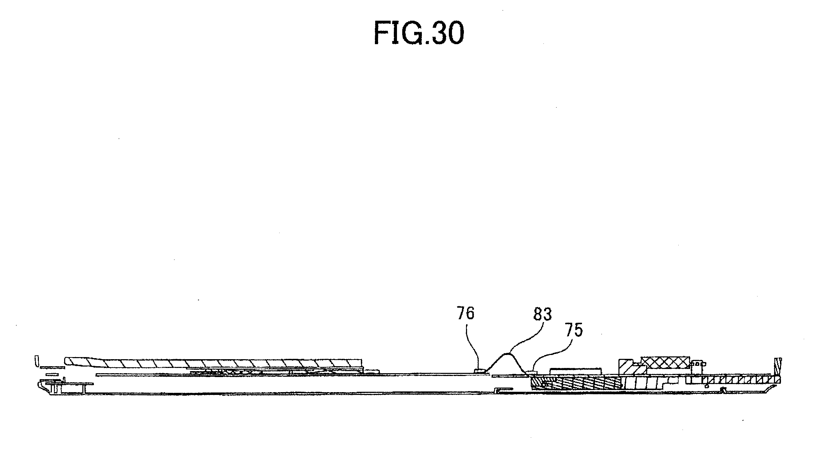

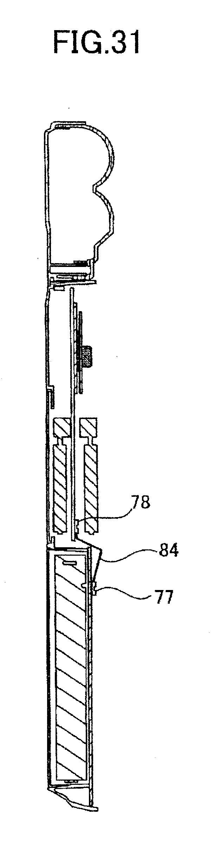

FIG. 29 is a plan view of the notebook PC 10 of the embodiment illustrating the inside of the main body unit 20 without the upper casing member 530. FIG. 30 is a cross-sectional view of FIG. 29 taken along a dot chain line and viewed in a direction of arrows A, A. FIG. 31 is a cross-sectional view of FIG. 29 taken along a dot chain line and viewed in a direction of arrows B, B.

Referring to FIG. 29, two connectors 75 and 76 and a FFC 83 are illustrated. An end of the FFC 83 is inserted in the connector 75 and the other end of the FFC 83 is inserted into the connector 76 to thereby electrically connect the connectors 75 and 76. The FFC 83 connecting the connectors 75 and 76 does not linearly connect these. Said differently, referring to FIG. 30, a side view of the FFC 83 between the end of the FFC 83 inserted in the connector 75 and the other end of the FFC 83 inserted in the connector 76.

Referring to FIG. 29, a plan view of the FFC 83 is not rotationally symmetrical.

Referring to FIG. 29, two connectors 77 and 78 and a FFC 84 are illustrated. An end of the FFC 84 is inserted in the connector 77 and the other end of the FFC 84 is inserted into the connector 78 to thereby electrically connect the connectors 77 and 78. Referring to FIG. 31, these connectors 77 and 78 are not arranged on the same plane. A side view of the FFC 84 connecting these connectors 77 and 78 includes a shape like a step in a middle of the FFC 84. The shape like the step of the FFC 84 is greater than the sizes of the connectors 77 and 78 and upwardly protrudes (a mountain-like shape). Referring back to FIG. 29, the FFC 84 includes a tab 841 laterally extending from the FFC 84 and is not rotationally symmetrical. A part 95 is installed at a position adjacent to the FFC 84. The reason why the part 95 is installed on the position is described later. The mountain-like shape of the FFCs 83 and 84 and the plan view of the FFCs 83 and 84 rotationally asymmetrical are subsequently described in detail.

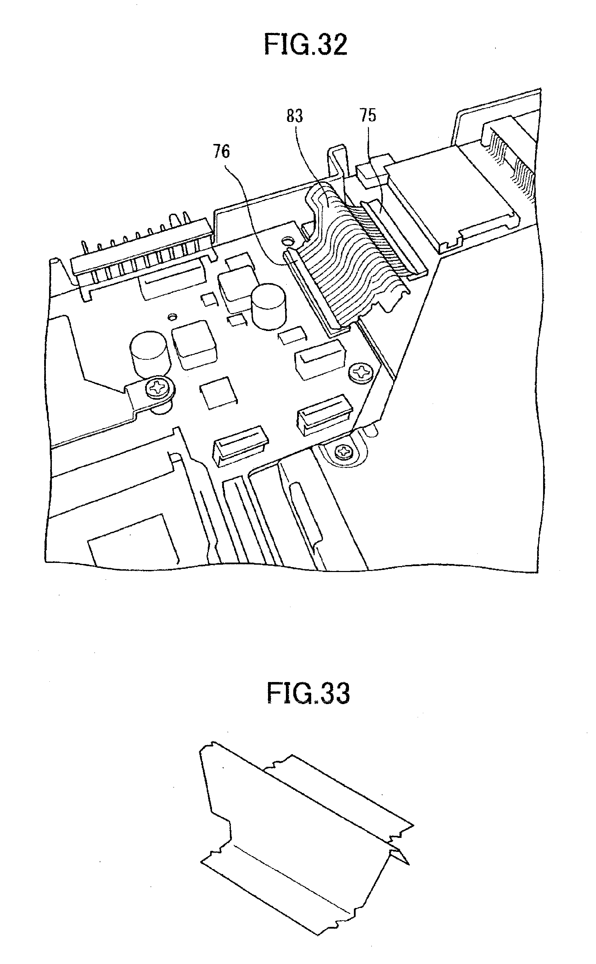

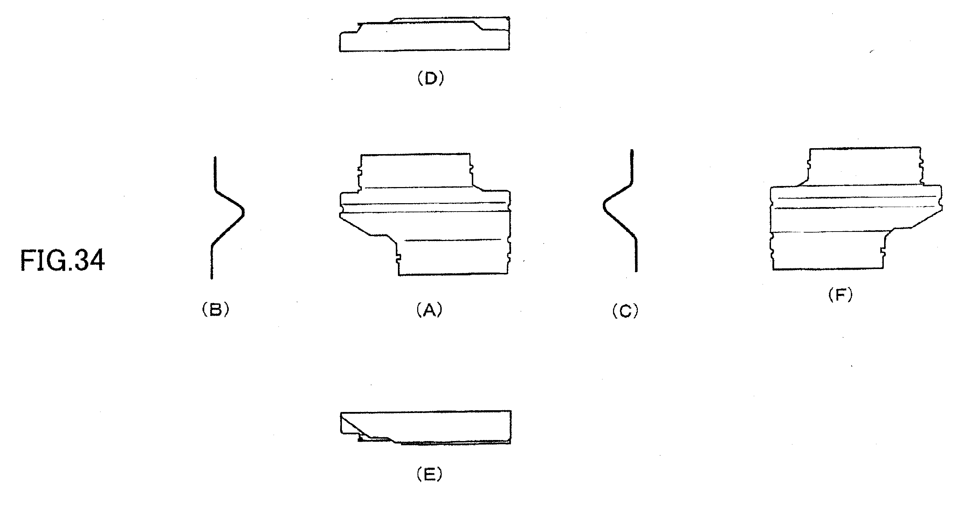

FIG. 32 is a perspective view of one 83 of two FFCs 83 and 84 and the proximity thereof. FIG. 33 is a perspective view of the FFC 83. FIG. 34 is a six sided view of the FFC 83. Referring to FIG. 34, (A) is a plan view; (B) is a left side view, (C) is a right side view; (D) is a back view; (E) is a front view; and (F) is a bottom view. Referring to FIG. 32, openings of the connectors 75 and 76 for receiving the FFC 83 are directed to face each other. The ends of the FFC 83 are inserted into the openings. Referring to FIG. 32 to FIG. 34, the FFC 83 is shaped to warp in the middle of the FFC 83. As illustrated in the plan view (A) and the bottom view (F) of FIG. 34, the FFC 83 is rotationally asymmetrical.

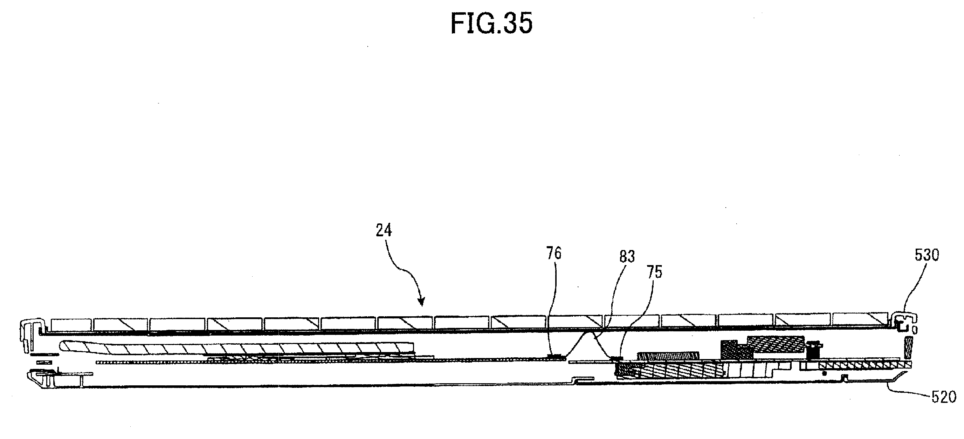

FIG. 35 is a cross-sectional view of the main body unit 20 covered with the upper casing member 530, which is taken along the dot chain line and viewed in the direction of the arrows A, A in FIG. 29.

Referring to FIG. 35, the FFC 83 is pushed by the upper casing member 530 at the warping portion. The FFC 83 has rigidity to a certain extent. Therefore, when the FFC 83 is pushed at the warping portion, force of mutually separating the ends of the FFC 83 is applied. Therefore, the force is applied to insert the ends of the FFC 83 into the two connectors 75 and 76, respectively. Without using an additional part and a special connector having locking function, the FFC 83 is securely inserted into the connectors 75 and 76.

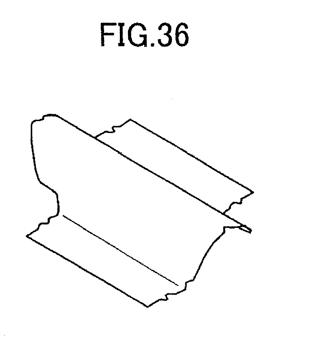

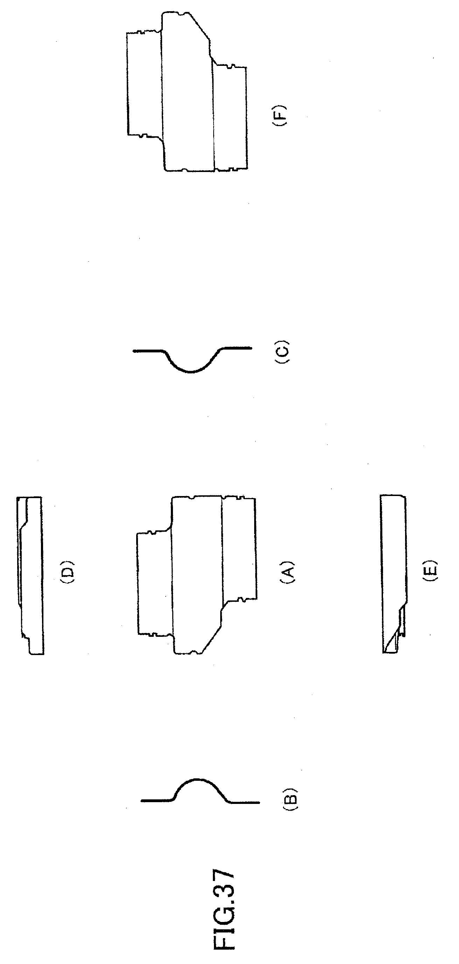

FIG. 36 and FIG. 37 are a perspective view and a six sided view illustrating a FFC as a modified example. Referring to FIG. 37, (A) is a plan view; (B) is a left side view, (C) is a right side view; (D) is a back view; (E) is a front view; and (F) is a bottom view in a similar manner to FIG. 34. The side view of the FFC 83 illustrated in FIG. 33 and FIG. 34 is shaped like a steeple-crowned mountain, and the side view of the FFC 83 illustrated in FIG. 36 and FIG. 37 is shaped like a round-shaped mountain. By forming the FFC 83 having the shape of the round-shaped mountain so that the peak of the mountain is pushed by the upper casing member 530, connection with the connectors 75 and 76 are ensured.

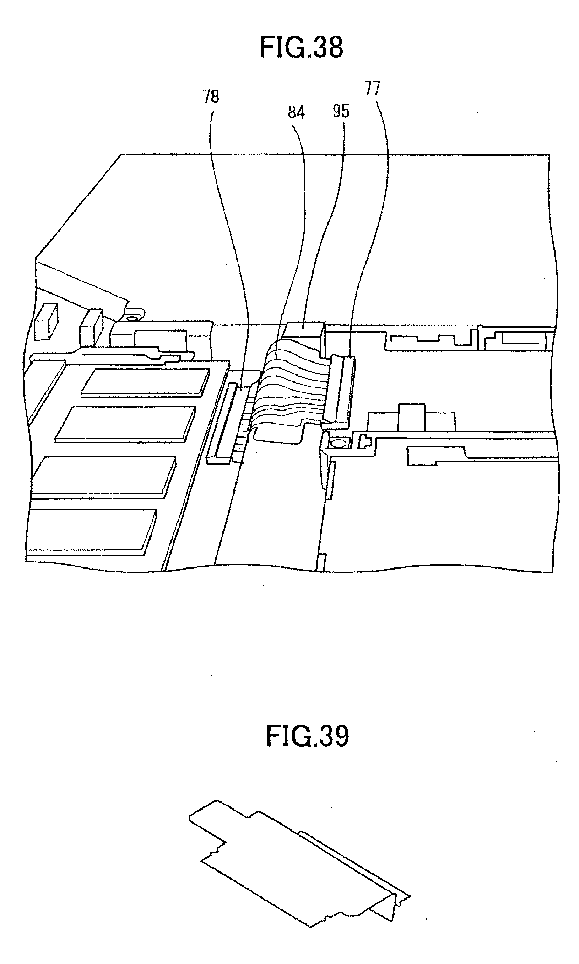

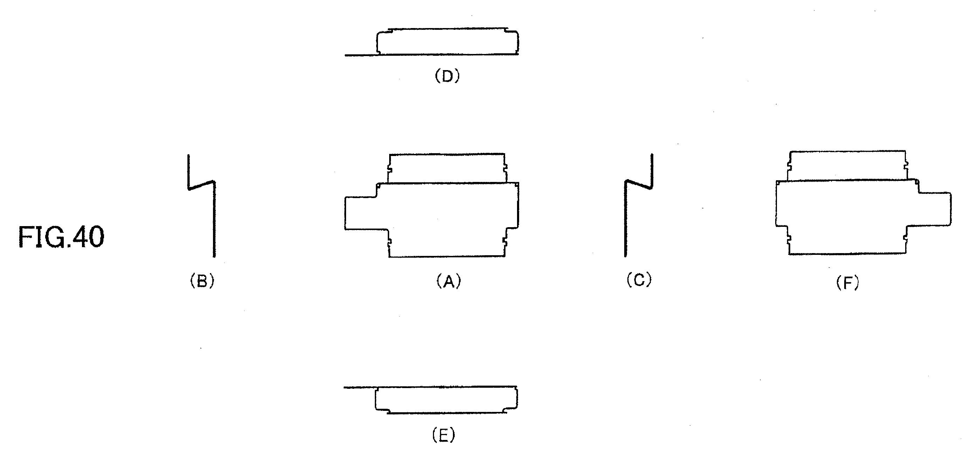

FIG. 38 is a perspective view of the other one 84 of two FFCs 83 and 84 and proximity thereof. FIG. 39 and FIG. 40 are a perspective view and a six sided view of the FFC 84, respectively. Referring to FIG. 40, (A) is a plan view; (B) is a left side view, (C) is a right side view; (D) is a back view; (E) is a front view; and (F) is a bottom view. Referring to FIG. 38, openings of the connectors 77 and 78 for receiving the FFC 84 are directed to face each other, and the connectors 77 and 78 are not arranged on the same plane to produce a step. In the FFC 84, a step illustrated in (B) of FIG. 40 is greater than the step (see FIG. 31) between the connectors 77 and 78 to be connected by the FFC 84. When the connectors 77 and 78 are connected as illustrated in FIG. 38, the FFC 84 protrudes like a mountain.

The mountain-like portion is pushed downward by the casing 510 in a similar manner to the FFC 83 to thereby push the end and the other end of the FFC 83 in the direction of strong insertion into the connectors 77 and 78. Thus, the FFC 84 is strongly inserted into the connectors 77 and 78. Therefore, the FFC 84 may be prevented from being disconnected from the connectors by vibration or the like.

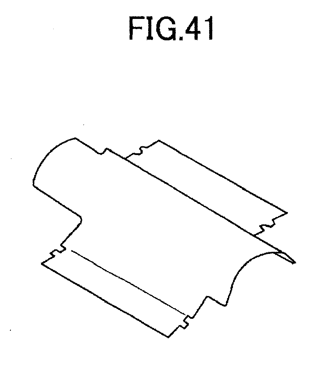

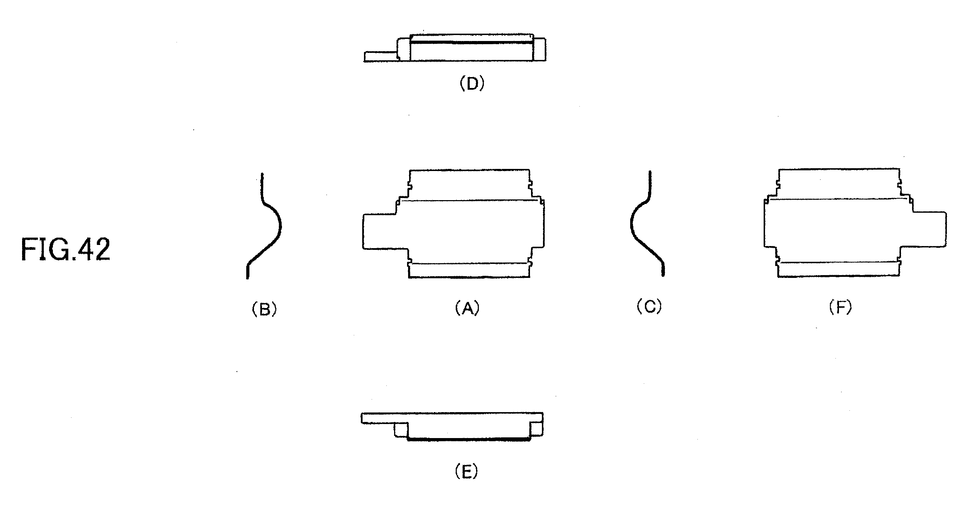

FIG. 41 and FIG. 42 are a perspective view and a six sided view illustrating a FFC as a modified example. Referring to FIG. 42, (A) is a plan view; (B) is a left side view, (C) is a right side view; (D) is a back view; (E) is a front view; and (F) is a bottom view.

Although in the FFC 83 illustrated in FIG. 33 and FIG. 34, the step is formed like the a steeple-crowned mountain, the FFC illustrated in FIG. 41 and FIG. 42 is shaped like a round-shaped mountain while producing a step between the ends.

When the round-shaped mountain like portion of the FFC is pushed by the casing 510, a connection between connectors and the FFC is ensured.

Although the FFC is pushed by the casing 510 above, it is possible to provide a member having a face extending over the connectors to be connected by the FFC in the casing 510, and push the FFC by the member.

The reason why the FFC is rotationally asymmetrical is described.

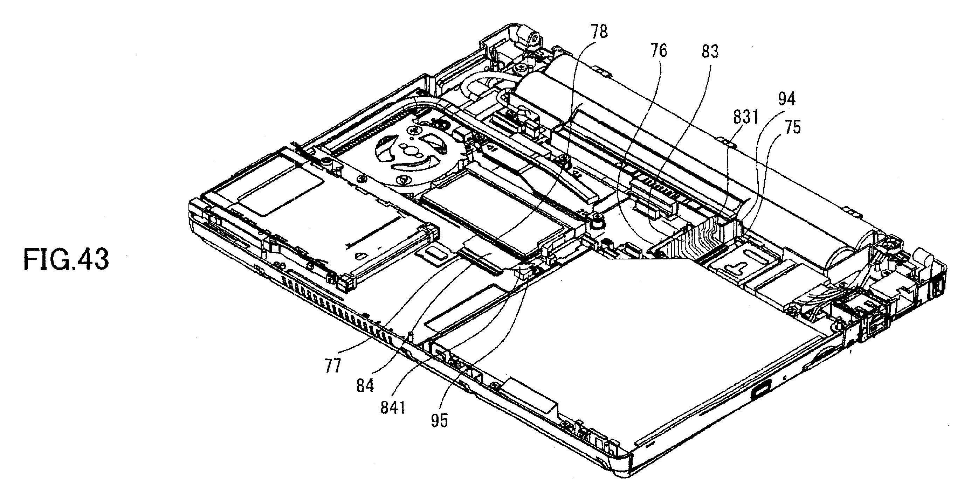

FIG. 43 illustrates two FFCs inversely connected. FIG. 43 is a perspective view of the FFC 83 and proximity of the FFC 83.

The one end of the FFC 83 is inserted into the connector 75 and the other end of the FFC 83 is inserted into the connector 76. This correct connection is referred to as a forward connection. Referring to FIG. 43, on the contrary to the forward direction, the other end of the FFC 83 is connected to the connector 75 and the end is connected to the connector 76. Hereinafter, this connection is referred to as a reverse connection. In the reverse connection, a part 831 protruding from a side of the FFC 83 contacts a standing member 94 to prevent the FFC 83 from being inserted into the connectors 75 and 76. Meanwhile, in the forward connection, the FFC 83 is properly inserted into the connectors 75 and 76 without interfering with something else. The reverse connection can be recognized by a person who is assembling the notebook PC.

Referring to FIG. 43, the FFC 84 is in the reverse connection. The FFC 84 has a tab 841 and the tab is located on the part 95 in the reverse connection. Therefore, the tab 841 lifts up as illustrated in FIG. 43 if the FFC 84 is forcibly inserted into the connector 77. In the forward connection, the tab 841 does not lift up without interfering with other members and parts as illustrated in FIG. 38. The reverse connection can be recognized by a person who is assembling the notebook PC 10 with the deformation of the FFC 84.

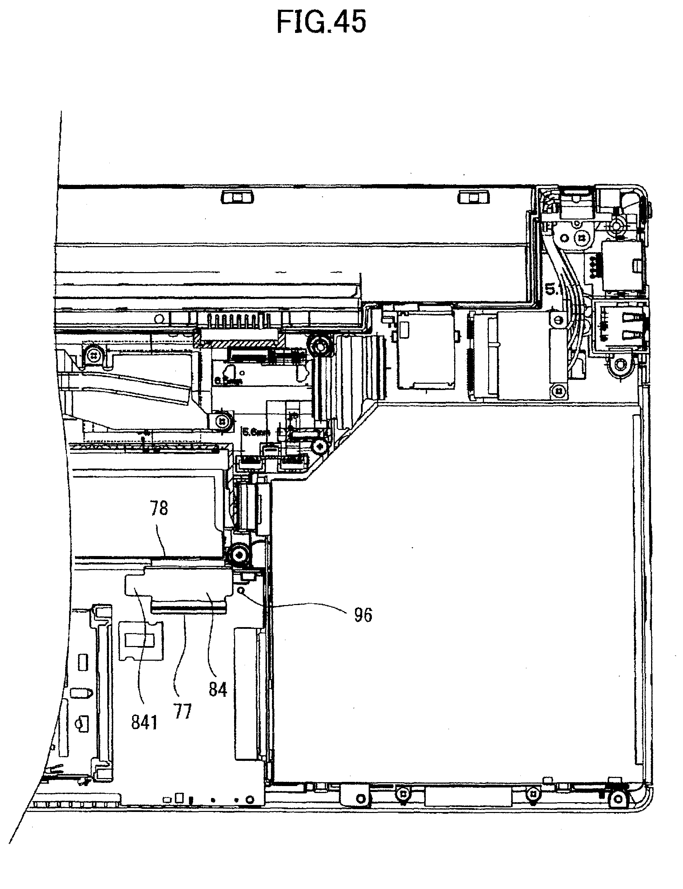

FIG. 45 illustrates a modified structural example of the FFC and proximity thereof.

A screw hole 96 is formed adjacent to the FFC 84. Referring to FIG. 45, the FFC 84 is in the forward connection. However, if the FFC 84 is in the reverse connection, the tab 841 of the FFC 84 covers the screw hole 96. Because the screw hole 96 is used after connecting the FFC 83 with the connectors 77 and 78, the screw hole 96 may not be used if the FFC 84 is in the reverse connection. Thus, the reverse connection can be recognized by the person who is assembling the notebook PC 10.

As described, it is possible to make the person who is assembling the notebook PC 10 recognize the reverse connection of the FFC with the connector only by the shape of the FFC and layout of a peripheral part, member and hole without increasing a cost caused by using a specially structured connector.

### EXPLANATION OF REFERENCE SIGNS

- 10 :: notebook PC;
- 20 :: main body unit;
- 21 :: power button;
- 22 :: function button;
- 23 :: indicator;
- 24 :: keyboard;
- 25 :: touch pad;
- 26 :: optical disk drive (ODD);
- 27 :: intake vent;
- 28 :: exhaust vent;
- 29 :: lid;
- 30 :: display unit;
- 41 :: fan;
- 42 :: hard disk drive (HDD) ;
- 60 :: circuit board;
- 61, 62 :: fixing piece;
- 71, 72, 73, 74 :: connector;
- 81, 82, 83, 84 :: FFC;
- 91, 92 :: adhesive tape;
- 95 :: part;
- 202, 203 :: opening;
- 260 :: ODD main body;
- 262,: 421, 512, 602, 603, 604 : connector;
- 501 :: ODD accommodating portion;
- 502 :: ODD accommodating area;
- 503 :: HDD accommodating area;
- 504 :: gap;
- 511 :: memory board;
- 520, 530 :: casing member;
- 521 :: boss;
- 521a, 522 :: attaching hole;
- 606 :: flexible board (FFC);
- 612 :: hook;
- 613, 623 :: fixing tab;
- 613a :: thread hole; and
- 841 :: tab

## Claims

1. An electronic apparatus comprising:
a first electronic component having a first connector on a side of the first electronic component;
a second electronic component having a second connector to be connected with the first connector;
a casing including an internal space formed by a first face and a second face which mutually face and side faces bridging peripheries of the first face and the second face, the casing having a first opening on the first face and a second opening on one of the side faces,
wherein the first electronic component is accommodated in the casing from the first opening while arranging the first connector in a direction from the first opening to the second opening, and
the second electronic component is accommodated in the casing by sliding the second electronic component from the second opening while arranging the second connector of the second electronic component in a direction toward the first electronic component accommodated in the casing so that the second electronic component is connected with the first electronic component.

2. The electronic apparatus according to claim 1, wherein the second electronic component further comprising:
a second electronic component body including the second connector;
a circuit board including a third connector to be connected with the first connector, a fourth connector to be connected with the second connector, and a fifth connector to be connected with the third connector, the fourth connector and a part of the electronic apparatus other than the first electronic component and the second electronic component in the casing.

3. The electronic apparatus according to claim 1 or 2,
wherein the first electronic component is accommodated in a final accommodating position inside the first opening by a linear movement of the first electronic component in a direction perpendicular to a plane of the first opening toward the first opening without moving the first electronic component in a direction across the direction perpendicular to the plane of the first opening after the linear movement.

4. The electronic apparatus according to any one of claims 1 to 3,
wherein the casing includes a lid covering the first opening after the first electronic component is accommodated in the casing.

5. The electronic apparatus according to any one of claims 1 to 4,
wherein the first electronic component is a hard disk drive for accessing an integrated hard disk.

6. The electronic apparatus according to any one of claims 1 to 5,
wherein the second electronic component is an optical disk drive configured to detachably load an optical disk for accessing the optical disk.

7. The electronic apparatus according to any one of claims 1 to 6,
wherein the casing includes a first casing member including at least a part of the first face and a second casing member including at least a part of the second face,
wherein the second electronic component has a first hole for screw-cramping one of the first casing member and the second casing member by a screw and a second hole for screw-cramping both of the first casing member and the second casing member,
wherein the one of the first casing member and the second casing member has a thread hole aligning with the first hole of the second electronic component when the second electronic component is accommodated in the casing by sliding the second electronic component from the second opening, and
wherein the both of the first casing member and the second casing member have an attaching hole aligning with the second hole of the second electronic component when the second electronic component is accommodated in the casing by sliding the second electronic component from the second opening.

8. The electronic apparatus according to any one of claims 1 to 7, further comprising:
a main body unit configured to perform arithmetic processing, the main body unit including the first electronic component, the second electronic component and the casing; and
a display unit including a display screen and connected to the main body unit so as to freely open or close relative to the main body unit.
